# EUROPÄISCHE PATENTANMELDUNG

(11) **EP 0 762 663 A2**
(43) Veröffentlichungstag der Anmeldung: **12.03.1997**
(21) Anmeldenummer: 96112642.2
(22) Anmeldetag: 05.08.1996
(51) Int. Cl.: H04B 1/69

(54) **Spreizspektrumnachrichtenübertragungssystem**

(30) Priorität: 10.08.1995 DE 19529477
(71) Anmelder: Enderlein, Janos, Dr., 10115 Berlin (DE); Chilla, Eduard, Dr., 15711 Königs-Wusterhausen (DE); Fröhlich, Heinz-Jürgen, Dr., 12489 Berlin (DE); Mönch, Andreas, 01187 Dresden (DE)
(72) Erfinder: Enderlein, Janos, Dr., 10115 Berlin (DE); Chilla, Eduard, Dr., 15711 Königs-Wusterhausen (DE); Fröhlich, Heinz-Jürgen, Dr., 12489 Berlin (DE); Mönch, Andreas, 01187 Dresden (DE)
(74) Vertreter: Morgan, James G.

(57) **Zusammenfassung**

Ein Spread-Spektrum-Signalübertragungsverfahren bzw. Spread-Spektrum-Signalübertragungssystem, bei dem in einem Sender eine Trägerfrequenz mit einem analogen oder digitalen Basisbandsignal frequenzmoduliert, der frequenzmodulierte Träger in eine Impulsfolge gewandelt, jeder Impuls in ein mit einem Kode verknüpftes bandgespreiztes Signal gewandelt und über eine Antenne ausgestrahlt wird und bei dem das ausgestrahlte Signal anschließend von einer Antenne empfangen und mit einem dem erstgenannten Kode zeitinversen Kode verknüpft wird, wodurch eine Reihenfolge von Korrelationsspitzen entsteht, die in einer Impulsfolge umgewandelt und anschließend zur Gewinnung eines dem analogen oder digitalen Basisbandsignals entsprechenden Ausgangssignal frequenzdemoduliert wird. Das Verfahren bzw. das System ermöglicht es mit einer geringen Zahl von Systemkomponenten, d.h. einfache und kostengünstige Systemkomponenten, eine störsichere Übertragung von sowohl analogen als auch digitalen Signalen mit niedriger Sendeleistung und/oder großer Reichweite.

## Beschreibung

Die vorliegende Erfindung befaßt sich mit einem Spread-Spektrum-Signalubertragungsverfahren nach Anspruch 1, mit einem Spread-Spektrum-Signalübertragungssystem nach Anspruch 9 sowie mit Sendern und Empfängern zur Verwendung bei dem Verfahren bzw. dem System.

Insbesondere befaßt sich die vorliegende Erfindung mit der drahtlosen Übertragung analoger und digitaler Signale.

In den letzten Jahrzehnten sind immer mehr drahtlose Kommunikationssysteme zum Einsatz gekommen, was einerseits zu einer Erhöhung der elektromagnetischen Belastung der Umwelt geführt hat und andererseits technische Lösungen zur Vermeidung von Störungen, insbesondere zur Vermeidung von gegenseitigen Störungen durch die verschiedenen Anwender notwendig gemacht hat.

Der Beitrag herkömmlicher Kommunikationssysteme zur elektromagnetischen Exposition hat zu Beschränkungen der Einsatzgebiete und zu Akzeptanzproblemen in der Bevölkerung geführt.

Im Stand der Technik sind eine Vielzahl von technischen Einrichtungen bekannt.

In letzter Zeit hat die kommerzielle Mobilfunkkommunikation wesentlich zugenommen.

Stand der Technik sind Mobilfunktelefone mit Sendeleistungen im Bereich von 1 W (DCS 1800 (E1)), 2-20W (GSM (D1/D2)) und 450 mW (DECT). Mit diesen Leistungen werden Zellengrößen abgedeckt, die im Bereich bis 35 km bei GSM bzw. bis 8 km bei DCS 1800 liegen. Diese hohen Sendeleistungen können sensible Geräte, z.B. Herzschrittmacher, stören und eventuell auch gesundheitliche Schäden hervorrufen. Der gegenwärtige Weg zur Reduzierung der Sendeleistung ist die drastische Verkleinerung der Zellengröße, die den Gesamtaufwand für das System extrem anwachsen läßt. Eine weitere Möglichkeit zur Reduzierung der Sendeleistung ohne jedoch die Zellengröße zu verkleinern bietet die Verwendung von Spread-Spektrum Übertragungstechniken, nachfolgend der Kürze halber SS-Übertragungstechnik genannt.

Die Entwicklung der SS-Übertragungstechnik ist eng verbunden mit den Fortschritten auf dem Gebiet der akustischen Oberflächenwellen (AOW) Technik, die seit den 70er Jahren stark vorangetrieben worden ist. Trotz der Vielzahl unterschiedlicher SS-Systeme blieb dieses Modulationsverfahren aus Gründen des technischen Aufwandes Speztalanwendungen vorbehalten.

Prinzipiell wird die Reduzierung der Sendeleistung durch Erhöhung der Übertragüngsbandbreite erreicht. Eine allgemeine Darstellung der SS-Übertragungstechnik auf Basis von AOW-Bauelementen enthält [1] und [2] des beigefügten Literaturverzeichnisses.

Nachfolgend wird der Stand der SS-Übertragungstechnik mit den Schwerpunkten Hochfrequenz (HF)-Elektronik, AOW-Technik und Signalverarbeitung näher erläutert, wobei die in quadratischen Klammern eingesetzten Nummern sich ebenfalls auf die Druckschriften beziehen, die mit der entsprechenden Numerierung im Literaturverzeichnis zu finden sind.

### (i) HF-Elektronik

Um die erforderliche Bandbreite für SS-Systeme realisieren zu können, ist eine vergleichsweise hohe Trägerfrequenz notwendig. Das ISM- (industrial- scientific, medicine) Frequenz-band 2.4-2.483 GHz ist z.B. für SS-Kommunikationstechnik geeignet. Aufgrund des geringeren Rauschens und des hohen Wirkungsgrades - auch bei niedriger Betriebsspannung - finden Bauelemente auf GaAs gegenüber Si-Bauelementen bevorzugt Anwendung. Stand der Technik sind integrierte Leistungsendstufen auf GaAs für die Sende- und Empfangsbaugruppen von Handys.

### (ii) AOW-Technik

Stand der Technik sind Convolver und Korrelatoren unter Nutzung von AOW auf piezoelektrischen und halbleitenden Substraten. Convolver haben den Vorteil der freien Wahl des verwendeten Kodes, besitzen jedoch den Nachteil der aufwendigen Synchronisierung. Als Alternative bieten AOW-Korrelatoren eine einfache Synchronisierung bei aufwendigerer Änderung des Kodes. Auch programmierbare AOW-Korrelatoren sind in der Literatur beschrieben worden, scheinen aber über die Militärtechnik hinaus keine Anwendungen gefunden zu haben. Diese Bauelemente wurden bevorzugt auf Quarz bzw. LiNbO₃ mit externer Elektronik [3], [4] bzw. Si-Substrat mit piezoelektrischer ZnO-Schicht [5] für die Integration der Elektronik mit der AOW-Technik realisiert. Die erstere Variante ist aufgrund der Hybridtechnik aufwendig, die zweite Variante insbesondere für hohe Frequenzen technologisch schwieriger zu beherrschen. Hinweise auf die Integration von akustischen und elektronischen Bauelementen auf dem piezoelektrischen Halbleitersubstrat GaAs zur Herstellung eines programmierbaren Korrelators geben [6] und [7]. Über den Einsatz dieser Bauelemente ist nichts bekannt.

### (iii) signalverarbeitung: Modulation und Kodierung

Eine Vielzahl von Signalverarbeitungs- und Modulationsprinzipien für SS-Systeme ist Stand der Technik. Eine detaillierte Übersicht ist in [8] enthalten. Demnach gibt es für die SS-Übertragung von digitalisierten Daten eine Reihe von Lösungen. Die wesentlichen Unterscheidungsmerkmale liegen in der Art und Weise der Signalverarbeitung, speziell in der Modulation und Kodierung und der damit verbundenen Hardware. Nachfolgend werden einige Methoden beschrieben, die als technologischer Hintergrund interessant erscheinen.

Ein Modem für die Übertragung binärer Daten mit sehr niedriger HF-Ausgangsleistung wird in [9] und [10] beschrieben und ist durch die Patente DE 39 01 639 C2 [11] und US 4,926 440 [12] geschützt. Die Erfindung beinhaltet ein asynchrones SS-System unter Nutzung eines AOW-Convolvers.

Im Sender erfolgt eine FSK- (frequenz shift keying) Modulation des binären Datenstroms durch einen spannungsgesteuerten Oszillator (VCO). Das FSK-signal mit den Frequenzen f''₁ und f''₂ wird nachfolgend durch Mischung mit einem Kode im DS-(direct sequence) Modulationsverfahren moduliert. Die Breite eines Bits (Basisinformationslänge T₈) muß sehr viel größer sein (Faktor T₈ > 10T..100T) als die Länge (Dauer) einer Kodesequenz (2T) [11, Sp. 5, Ab. 50]. Das Ergebnis der Modulation ist ein phasenkodiertes Signal mit binär umgetasteter Mittenfrequenz (Trägerfrequenz) f''₁ und f''₂. Dieses Signal wird frequenzumgesetzt, gefiltert, verstärkt und ausgesendet (nunmehr F'''₁ und F'''₂).

Im Empfänger wird das SS-Signal frequenzumgesetzt, gefiltert, (bezeichnet nunmehr mit f₁ und f₂ mit den Trägerfrequenzen f''₁ und f''₂) und im Convolver mit einem Referenzkode (zeitinverses Signal vom Sender) mit den Frequenzen f₁ bzw. f₂ (Trägerfrequenzen f''₁ und f''₂ gefaltet.

In der ersten Ausführungsform sind die beiden Frequenzen so gewählt, daS das SS-Signal mit der Trägerfrequenz f₁'' nach der Faltung (mit dem Referenzkode der Trägerfrequenz f₁'') Korrelationspeaks mit der Periode f₁ bildet, das Signal ist jedoch mit der zweiten Trägerfrequenz nicht korreliert [11, Sp. 10, Ab. 40]. Aus mehreren Peaks wird das Bit in TTL-Niveau rekonstruiert.

Eine weitere Ausführungsform der in [11] beschriebenen Erfindung besteht aus einem baugleichen Sender und einem Empfänger mit Doppel-Convolversystem [11, Sp. 10, AB. 65]. Bei dieser Variante detektiert jeweils ein Convolver (Trägerfrequenz ist konstant) das SS-Signal mit der Trägerfrequenz f₁'' und der andere das SS-Signal mit der Trägerfrequenz f₂'' [11, Sp. 10, Ab. 45]. Die Reihe von Faltungssignalen mit den Perioden f₁ bzw. f₂ werden durch einen Vergleichsmodulator in ein binäres Ausgangssignal gewandelt.

Die Datenrate wird mit 1200 - 9600 Bit/s angegeben, die Reichweite betrug 110 m bei einer Feldstärke von 500 µV(m (bzw. 10 km bei 1 W) [10]. Als Anwendung wird die Übertragung von Daten zwischen Computern genannt. Die Erweiterung des Modulationsprinzips auf Duplex-Übertragung ist in [13] beschrieben.

Durch die genannte Methode, die auf der Änderung der Trägerfrequenz des SS-Signals beruht, können nur binär kodierte Signale übertragen werden. Eine analoge Signalübertragung ist mit dieser Methode nur nach vorheriger Umsetzung in einen binären Datenstrom möglich.

In dem beschriebenen System ist zur Gewährleistung einer zuverlässigen Detektion eine Mehrfachabtastung des binären Signals (10...100-fach) notwendig. Die Datenrate wird dadurch stark reduziert. Der hardwaremäßige Aufwand ist nicht unerheblich.

Ein SS-Radiosystem für drahtlose Übertragung wird in [14] vorgestellt. Der dortige Vorschlag beinhaltet ein DPSK- (differential phase shift keying) SS-System. Die Bandspreizung erfolgt durch Mischen der differentiell kodierten binären Daten mit einem Kode (127 chip). Genutzt wird dazu ein BPSK-(binary phase shift keying) Modulator. Der Kode wird extern erzeugt. Der Empfänger nutzt eine DPSK-Demodulation. Als Anwendung wird die Kommunikation innerhalb von Bürogebäuden erwähnt. Experimente erfolgten mit einer HF-Ausgangsleistung im Bereich von einigen 100 nW mit Übertragungsentferenungen bis 30 m.

Integrierte Module mit DPSK-Modulationsverfahren, welche zwei kombinierte Matched-Filter (PSK-Filter) behinhalten, sind in [15] und [16] beschrieben. Die Bitraten werden mit 300 kbit(s (63 chip Kode) [15] bzw. 250 kbit/s (103 chip Kode) [16] angegeben.

Eine Übertragung analoger Signale ist auch mit diesem System nicht möglich.

Ein BPSK- (binary PSK) Kommunikationssystem für TDMA-Betrieb (time division multiple access) wird in [17] beschrieben. Das PSK-Signal (8 chip Kode) wird mit negativen bzw. positiven Impulsen unter Nutzung einer speziellen AOW-Anordnung mit zwei Anregungswandlern und einem Ausgangswandler generiert. Die synchronisierte Demodulation des Signals erfolgt mit einem Bauelement mit demselben Layout. Als Anwendung wird die Audio-Signalübertragung nach A/D (analog-digital) Wandlung-genannt. Die Datenrate liegt je nach Kanalkapazität bei 50 Bit/s (30.000 Kanäle) bis 700 kBit/s (1 Kanal).

Analoge Signale können mit diesem System ebenfalls nicht direkt übertragen werden, sondern nur nach vorheriger A/D-Wandlung.

Die Übertragung eines Meßsignals in einer Telemetrieanwendung mit SS-Technik wird in [18] beschrieben. Hier wird davon ausgegangen, daß das Meßsignal als frequenzanaloges Ausgangssignal vorliegt. Es wird durch Mischung mit einem Referenzsignal in ein niederfrequentes (NF) Ausgangssignal umgewandelt. Pro Periode dieses NF-Signals wird ein SS-Kode erzeugt und übertragen. Im Empfänger wird dieses Signal korreliert, so daß die Wiederholfrequenz der Impulse ein Maß für den Meßwert darstellt.

Die Aufgabe der vorliegenden Erfindung liegt darin eine drahtlose Übertragung sowohl analog als auch digitaler Signale unter Nutzung der SS-Technik zu ermöglichen, wobei auch mit niedriger Sendeleistung eine Übertragung über eine große Reichweite ermöglicht werden soll. Mit anderen Worten soll im Vergleich zu herkömmlichen Kommunikationssystemen mit niedrigeren Sendeleistungen eine Übertragung über verhältnismäßig größere Reichweiten erreicht werden.

Mit dem erfindungsgemäßen Übertragungsverfahren bzw. Übertragungssystem soll es u.a. möglich werden, eine zuverlässige Signalübertragung, z.B. Sprachübertragung, mit sehr geringen spektralen Leistungsdichten der elektromagnetischen Ausstrahlung zu erreichen, was insbesondere für den Einsatz in sensiblen Bereichen, z.B. in Krankenhäusern, Verkehrsmitteln oder explosionsgefährdeten Anlagen oder in Umgebungen mit hoher elektromagnetischer Störbelastung, z.B. Kraftwerksanlagen, Sendeanlagen oder bei berufsgebundenen Dauerexpositionen (Betriebsfunk) geeignet ist. Es soll außerdem eine signalübertragung über große Reichweiten bei gleicher Sendeleistung im Vergleich zu konventionellen Systemen sowie eine signalübertragung mit niedrigen Sendeleistungen mit gleicher Reichweite im Vergleich zu konventionellen Systemen erreicht werden. Darüber hinaus soll eine Übertragung von Ton und Bild in hoher Qualität, d.h. mit großer Bandbreite erreicht werden.

Insbesondere soll auch mittels der vorliegenden Erfindung ein Verfahren bzw. ein System geschaffen werden, welches eine sichere Abgrenzung von autorisierten Nutzerkreisen gegenüber nicht berechtigten Nutzern gewährleistet, z.B. für Radio- und TV-Sendungen, die nur gegen Entgelt empfangen werden dürfen,und es soll auch eine sichere Signalübertragung, beispielsweise im Bereich der personengebundenen Kommunikation und die Signalübertragung in einem System für sehr viele Teilnehmer ermöglicht werden.

Anwendungsfelder liegen also überall dort, wo eine zuverlässige und störsichere Übertragung von Signalen, wie z.B. Sprache, drahtlos über Entfernungen in Mobilfunkzellengrößen von ca. 10 km mit sehr niedrigen Sendeleistungen erfolgen soll.

Um diese Aufgaben zu lösen, wird verfahrensmäßig ein spread-Spektrum-Signalübertragungsverfahren vorgesehen, bei dem in einem Sender eine Trägerfrequenz mit einem analogen oder digitalen Basisbandsignal moduliert, insbesondere frequenzmoduliert, und der frequenzmodulierte Träger in eine Impulsfolge gewandelt wird, deren Impulse zur Auslösung kodierter bandgespreizter Signale verwendet wird, welche über eine Antenne ausgestrahlt werden, und bei dem die ausgestrahlten Signale anschließend von einer Antenne empfangen und mit einem dem Kode der kodierten bandgespreizten Signale zeitinversen Kode verknüpft werden, wodurch eine Sequenz von Korrelationsspitzen entsteht, die in eine Impulsfolge umgewandelt und anschließend zur Gewinnung eines dem analogen oder digitalen Basisbandsignals entsprechenden Ausgangssignal demoduliert, insbesondere frequenzdemoduliert wird.

Insbesondere wird das Verfahren so durchgeführt, daß die Umwandlung des frequenzmodulierten Signals in eine Impulsfolge mittels eines Nullpunktdetektors oder eines Schwellwertschalters erfolgt und die Impulsfolge einer Schaltung zugeführt wird in welcher durch die Impulsfolge eine Folge kodierter Signale ausgelöst wird, und daß die Verknüpfung des Empfangssignals mit dem zeitinversen Kode mittels eines Korrelators durchgeführt wird, dessen Ausgangssignal eine Sequenz von Korrelationsspitzen ist, die mittels eines Demodulators mit Schwellwertschalter auf der Empfängerseite zu der Impulsfolge umgewandelt wird, deren Wiederholfrequenz der Wiederholfrequenz der Impulsfolge auf der Senderseite entspricht.

Vorrichtungsmäßig wird erfindungsgemäß ein Spread-Spektrum-Signalübertragungssystem vorgeschlagen, bestehend aus einem Sender mit einem Oszillator zur Erzeugung einer Trägerfrequenz, mit einer Modulationseinrichtung zur Modulierung der Trägerfrequenz, insbesondere zur Frequenzmodulierung der Trägerfrequenz mit einem analogen oder digitalen Basisbandsignal, mit einer Kodiereinrichtung bzw. mit einem Kodiermodul in der bzw. in dem die modulierte Trägerfrequenz in eine Impulsfolge umwandelbar ist, deren Impulse dann der im Sinne der Auslösung von kodierten bandgespreizten Signalen, gegebenenfalls nach vorheriger Frequenzumsetzung, mit einem Kode verknüpft werden und mit einer Antennenschaltung zum Ausstrahlen der von der Kodiereinrichtung erhaltenen Signale, gegebenenfalls nach vorheriger Freguenzumsetzung, sowie mit einer eine Antenne aufweisende Empfangsschaltung, welche die empfangene Signale, gegebenenfalls nach Frequenzumsetzung, einer Dekodierschaltung zuführt, in welcher das Signal mit einem dem erstgenannten Kode zeitinversen Kode verknüpfbar ist, wodurch eine Sequenz von Korrelationsspitzen entsteht, mit einer Schaltung zur Umwandlung der Reihenfolge von Korrelationsspitzen in ein Sinussignal und mit einem Demodulator, welcher das Sinussignal, gegebenenfalls nach vorheriger Frequenzumwandlung, in ein Ausgangssignal demoduliert, das dem analogen oder digitalen Basisbandsignal entspricht.

Das Verfahren bzw. die Vorrichtung unterscheidet sich von anderen bekannten Verfahren bzw. Vorrichtungen u.a. dadurch, daß vom Sender eine Sequenz gleicher Kodes konstanter Mittenfrequenz gesendet wird, welche das frequenzmodulierte Basisbandsignal in Form der Zeitabhängigkeit dieser Sequenz enthält, wobei dieses nach Korrelationsempfang wieder zurückgewonnen wird. Ein wesentlicher Vorteil besteht darin, daß eine Übertragung frequenzmodulierter Signale ohne Analog-Digital-(A/D)Wandlung, die in der Regel eine Begrenzung der Übertragungsrate zur Folge hat, vorgenommen werden kann. Ein weiterer Vorteil ist, daß bei Beibehaltung der wesentlichen Komponenten des Systems auch die Übertragung digitaler Signale mit vergleichsweise hoher Datenrate möglich ist. Durch den Wegfall der Notwendigkeit einer empfangsseitigen Signalsynchronisation wird das System einfach und kostengünstig. Durch die geringe Zahl von Systemkomponenten und deren Realisierbarkeit in Planartechnologie (z.B. der AOW-Komponenten) bietet sich eine weitgehende Integration an.

Kurz ausgedrückt umfaßt die Erfindung eine SS-Kommunikationsanordnung bestehend aus einem Sender, in dem eine Trägerfrequenz mit einem analogen oder digitalen Basisbandsignal moduliert, die modulierte Trägerfrequenz in eine Impulsfolge und die Impulsfolge in geeigneter Weise mit einem Kode verknüpft wird und aus einem Empfänger, in dem die Basisbandinformation durch Korrelationsempfang und Demodulation zurückgewonnen wird, wobei sowohl analoge als auch digitale Signale übertragen werden können.

Kennzeichen für die Erfindung ist, daß die Mittenfrequenz der Kodes nicht verändert werden muß und daß die Wiederholfrequenz der Kodes als Informationsträger dient.

Die zuverlässige Übertragung analoger Signale mit hoher Dynamik erfordert als Primärmodulation eine breitbandige analoge Phasen- bzw. Frequenzmodulation (FM) der Trägerfrequenz mit dem Basisbandsignal. Im Sender erfolgt die Sekundärmodulation in der Weise, daß aus dem primär modulierten Signal (FM) nichtäquidistante Stützstellen generiert werden, welche die Zeitpunkte der Aussendung der Kode bestimmen. Im Empfänger erfolgt der Korrelationsempfang der Kodesequenz. Aus der Wiederholfrequenz der Korrelationsspitzen wird die Basisbandinformation zurückgewonnen, wie unten anhand eines konkreten Beispiels näher erläutert wird.

Weitere bevorzugte Ausführungsformen der Erfindung sind den weiteren Patentansprüchen zu entnehmen.

Die Erfindung wird nachstehend näher erläutert in bezug auf ein konkretes Ausführungsbeispiel und unter Bezugnahme auf die Zeichnung, in welcher zeigt:
- Fig. 1A: den Sender eines erfindungsgemäßen Spread-Spektrum-Übertragungssystems,
- Fig. 1B: einen Empfänger eines erfindungsgemäßen Spread-Spektrum-Übertragungssystems, der insbesondere zur Anwendung mit einem Sender entsprechend der Fig. 1A gedacht ist,
- Fig. 2A: verschiedene Diagramme zur Erläuterung des Kodiervorganges im Sender nach der Fig. 1A in bezug auf die Erzeugung des auszustrahlenden Signals, und
- Fig. 2B: verschiedene Diagramme zur Erläuterung der Signalverarbeitung in der Dekodierschaltung und in der Demodulatorschaltung des Empfängers gemäß Fig. 1B zur Rückgewinnung des Basisbandsignals.

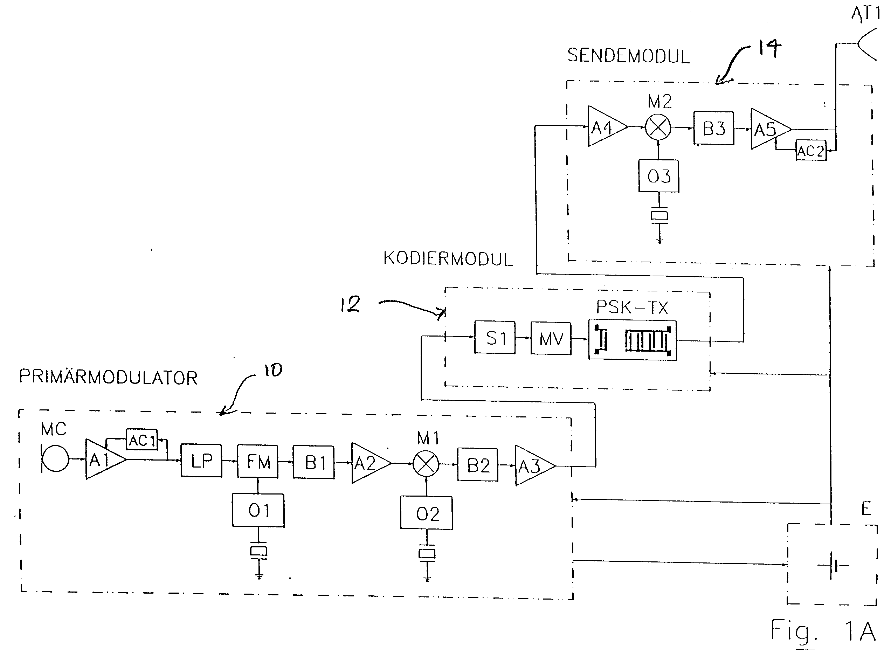

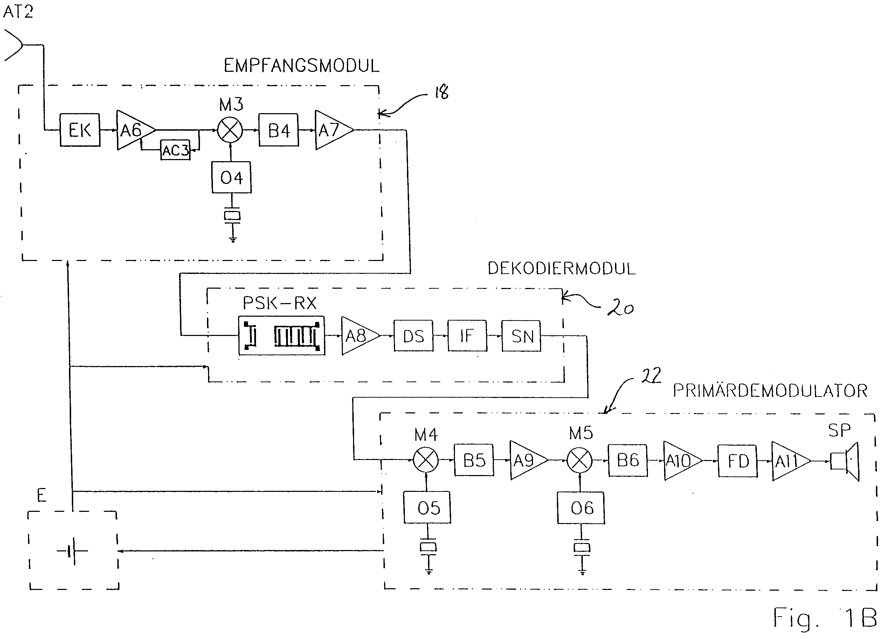

Fig. 1 zeigt eine Ausführung des erfindungsgemäßen SS-Kommunikationssystems. Fig. 1A enthält den Sender, Fig. 1B den Empfänger. Der Sender besteht aus dem Primärmodulator 10, dem Kodiermodul 12 und dem Sendemodul 14. Der Primärmodulator beinhaltet einen Frequenzmodulator FM, der ein Basisbandsignal in ein frequenzanaloges Signal wandelt. Zur Erläuterung wird im folgenden beispielhaft angenommen, daß das Basisbandsignal ein Audiosignal ist. Dieses Signal wird mit dem Mikrophon MC aufgenommen, mit einem Verstärker A1 mit automatischer Verstärkungsregelung AC1 verstärkt und mittels eines Tiefpasses LP gefiltert. Ein Oszillator O1 liefert die Trägerfrequenz für die Frequenzmodulation, die durch den Frequenzmodulator FM realisiert wird. Nach Passieren eines Bandpaßfilters B1 und eines Verstärkers A2 wird das Signal in die Größenordnung der gewünschten Wiederholfrequenz umgesetzt. Die Baugruppen für diese Funktion sind ein Mischer M1, ein Oszillator O2 und die Filter- B2 und Verstärkereinheit A3. Je nach Größe der Wiederholfrequenz kann die Umsetzung durch die Mischung mit dem Oszillator O2 unterbleiben oder durch eine Mischung mit einer weiteren Oszillatorstufe ergänzt werden.

Das Ausgangssignal des Primärmodulators wird in den Kodiermodul 12 eingespeist. Hier wird es mit Hilfe eines Nullpunktdetektors oder Schwellwertschalters S1 mit jeweils nachgeschaltetem monostabilen Multivibrator MV in Impulse gewandelt. Die entstehende Impulsfolge wird dem PSK-Sendefilter PSK-TX zugeführt. Das Ausgangssignal des Kodiermoduls wird dem Sendemodul zugeführt. Nach Verstärkung mit dem Verstärker A4 wird das Signal, gegebenenfalls nach Frequenzumsetzung mit Hilfe eines Oszillators O3 und Mischers M2, mit nachfolgendem Bandpaß B3 und Verstärker A5 mit automatischer Verstärkerregelung AC2 der Sendeantenne AT1 zugeführt. Die Spannungsversorgung aller Module kann durch eine gemeinsame Versorgungseinheit E erfolgen.

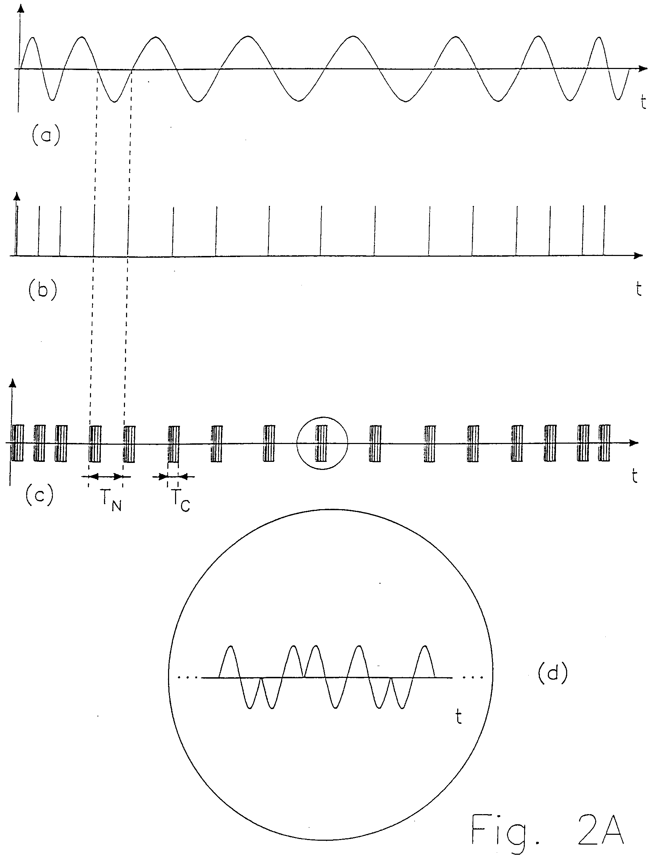

Um die Aufgabe des Kodiermoduls deutlich zu machen, wird die darin stattfindende Signalwandlung anhand der Fig. 2A näher beschrieben. In der Signalspur a ist ein beispielhafter Zeitverlauf für einen gewissen Zeitbereich dargestellt. Dieses Signal wird in eine Impulsfolge derart gewandelt, daß jeder n-te (n=1,2...) Nulldurchgang oder der Durchgang durch einen Schwellwert einen Impuls auslöst. Für n=1 ist die Impulsfolge in Signalspur b dargestellt. Jeder Impuls erzeugt am Ausgang des PSK-Sendefilters (PSK-TX) einen Kode, der durch die Struktur des Filters bestimmt wird (Signalspur c). T_{N} bezeichnet den zeitlichen Abstand zweier benachbarter Impulse und T_{c} die zeitliche Länge des PSK-Kodes. Die typische Struktur eines PSK-Kodes mit der charakteristischen Phasenumtastung ist in Teilbild d skizziert.D.h. für jeden Impuls der Fig. 2A(c) wird ein Signalverlauf nach der Fig.2A(D) erzeugt, wobei der Abstand zwischen den jeweiligen Signalverläufen dem Abstand zwischen den jeweiligen Impulsen nach der Fig. 2A(c) entspricht.

Der in Fig. 1B dargestellte erfindungsgemäße Empfänger besteht aus einem Empfangsmodul 18, einem Dekodiermodul 20 und einem Primärdemodulator 22. Das SS-Signal wird von einer Antenne AT2 empfangen. Außerhalb des SS-Bereiches liegende Frequenzen werden durch einen Eingangskreis EK ausgefiltert. Nach der Verstärkung durch einen Verstärker A6 mit automatischer Verstärkungsregelung AC3 wird das SS-Signal mittels eines Mischers M3 und eines Oszillators O4 auf die Frequenz des PSK-Filters der Dekodierschaltung bzw. des Dekodiermoduls 20 umgesetzt. Das Signal wird nach der Filterung durch das Filter B4 und Verstärkung mit dem Verstärker A7 auf den Eingang des Dekodiermoduls gegeben. Hier wird das Signal in den Eingang des Empfangs-PSK-Filters (PSK-RX) eingespeist. Das Filter PSK-RX enthält den zeitinversen Kode des Sendefilters. Jedes einlaufende, mit dem Sendekode versehene Signal erzeugt eine Korrelationsspitze am Ausgang des Filters. Nach Verstärkung mit Verstärker A8 werden aus den Korrelationsspitzen mittels eines Demodulators mit Schwellwertschalter DS Impulse erzeugt. Aus den Impulsen wird nachfolgend mittels der Impulsformeinrichtung IF ein Rechtecksignal mit TTL-Pegel generiert. Für die Wiedergewinnung der analogen Signale wird das Rechtecksignal mit der Einrichtung SN in ein Sinussignal gewandelt. Dieses wird nunmehr in den Primärdemodulator eingekoppelt. Nach der Frequenzumsetzung, hier dargestellt als zweistufige Umsetzung mit den Baugruppen Mischer M4, M5, Oszillator O5, O6, Bandpaßfilter B5, B6 und Verstärker A9, A10, wird das Signal mit dem Frequenzdemodulator FD demoduliert, mit dem Verstärker A11 verstärkt und einem Lautsprecher SP zugeführt.

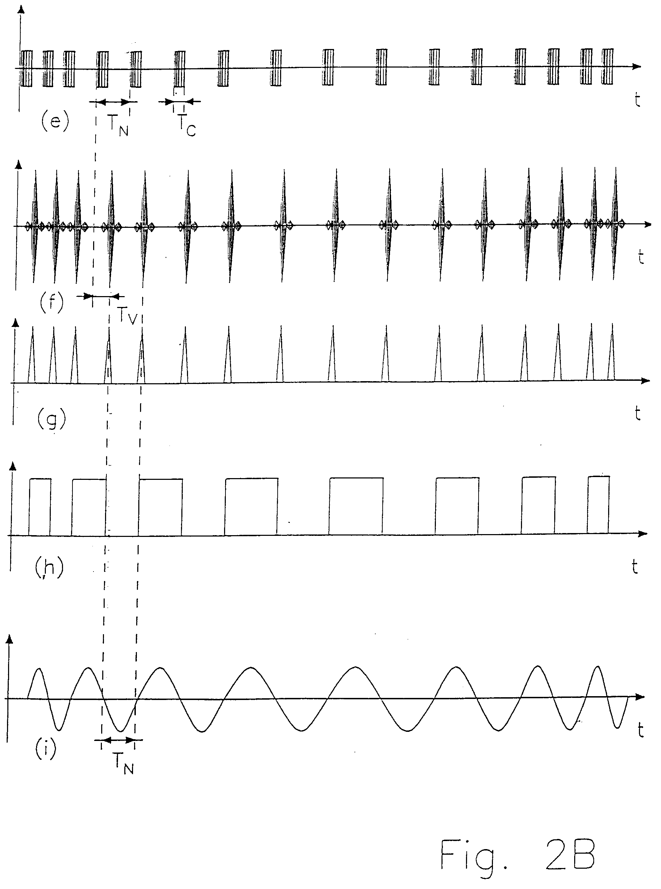

Die Aufgabe des Dekodiermoduls wird anhand der Fig. 2B näher beschrieben. Signalspur (e) zeigt die zeitliche Abfolge der empfangenen kodierten Signale, die mit der gesendeten Kodefolge übereinstimmt. In der Spur (f) sind die mit der Verzögerung Tᵥ versehenen Korrelationspeaks gezeigt, in Spur (g) die daraus gewonnenen Impulse. Jeder m-te (m=1,2...) Impuls wird zur Erzeugung eines Rechtecksignals (das in Spur h für m=1 beispielhaft dargestellt ist) genutzt. Aus dem Rechtecksignal wird ein frequenzmoduliertes Sinussignal generiert (Spur (i)).

Wie bisher beschrieben wird im Empfänger aus den Korrelationsspitzen mittels eines in DS enthaltenen Schwellwertschalters S2 und einer Impulsformeinrichtung IF ein Rechtecksignal generiert. In einer weiteren Ausführungsform beinhaltet die Impulsformeinrichtung IF einen monostabilem Multivibrator, der bei jeder Korrelationsspitze einen Impuls erzeugt. Die Impulse haben eine konstante oder variable zeitliche Länge. Nach Ablauf der Haltezeit fällt der Pegel auf den Ausgangswert zurück. Die Folgefrequenz ist frequenzgleich mit der Frequenz der Korrelationsspitzen. Die FM-Demodulation erfolgt durch Integration des Rechtecksignals über der Zeit (Prinzip des Zählfrequenzdemodulators).

Die mehrfach in der Beschreibung angeführte Frequenzumsetzung (durch die Mischung mit den Oszillatorfrequenzen der Oszillatoren O₂ bis O₆) ist nicht prinzipiell erforderlich. Sie dient lediglich dazu bestimmte Signalverarbeitungsschritte in vorgesehenen Frequenzbereichen durchführen zu können.

Dem Fachmann wird es nicht schwerfallen, Primärmodulation bzw. -demodulation mit anderen bekannten Verfahren, zum Beispiel Quadraturmodulation, zu realisieren bzw. zu kombinieren, um die für den Korrelationsmodul benötigten Signale bereitzustellen bzw. die vom Dekodiermodul erhaltenen Signale in ein Nutzsignal umzuwandeln.

### Literaturverzeichnis:

[1] M.G. Unkauf: "Surface Wave Devices in Spread Spectrum Systems", In: Surface Wave Filters, H. Matthews (Editor), John Wiley & Sohns, N.Y., 1977, S. 477-509.
[2] C. Campbell: "Surface Acoustic Wave Devices and Their Signal Processing Applications", Academic Press, Inc. Boston, 1989, 297 ff.
[3] J. Lattanza, F.G. Herring, P.M. Krenik, A.F. Clerihew."240 MHz Wideband Programmable SAW Matched Filter", In: Ultrasonic Symposium, 1983, S. 143-150.
[4] C.M. Panasik, D.E. Zimmermann: "A 16 Tap Hybrid Programmable Transversal Filter Using Monolithic GaAs Dual-GateFet Array", In: Ultrasonics Symposium, 1985, S. 130-133.
[5] F.S. Hickernell, M.S. Adamo, R.V. De Long, J.G. Hinsdale: "SAW Programmable Matched Filter Signal Processor, In: Ultrasonics Symposium, 1980, S 104-108.
[6] S.W. Merritt, G.K.Montress, T.W. Grudkowski: "GaAs SAW/MESFET Programmable Asynchrous Correlator with complex Tap Weighting", In: Ultrasonics Symposium, 1983, S. 181-184.
[7] R.T. Webster, P.H. Carr. Rayleigh waves on GaAs, Rayleigh-Wave Theory and Application, Springer Verlag, Berlin, 1985, Ch. 3, S. 123-130.
[8] R.C. Dixon: Spread Spectrum Systems, N.Y., Wiley, 1994.
[9] K. Tsubouchi, T. Tomioka, T. Sato, C. Endo, N. Mikoshiba: "An asynchrounous Spread Spectrum Wireless-Modem Using a SAW Convolver", In: Ultrasonics Symposium, 1988, S. 213-218.
[10] K. Tsubouchi, N. Mikoshiba: "An Asynchronouse Multichannel Spread Spectrum Tranceiver using a SAW convolver", Ultrasonics Symposium, 1989, S. 165-170.
[11] Mikoshiba, Nobuo, Sendai, Miyagi, JP; Tsubouchi, Kazuo, Sendai, Miyagi, JP: "Spread-Spectrum-Kommunikationsanordnung", Patentschrift: DE 39 01 639 C2, 20.01.89.
[12] Mikoshiba, et al.: "Spread-Spectrum Communication Apparatus", United States Patent: 4,926,440, May 15, 1990).
[13] K. Tsubouchi, H. Nakase, A. Namba, K. Masu: "Full Duplex Transmission Operation of a 2.45-GHz Asynchronous spreas Spectrum Modem Using a SAW Convolver", In: IEEE Transaction on UItrasonics, and Frequency Control, 1993, VoL 40, No. 5., S.478-482.
[14] M. Kavehrad, G.E.Bodeep: "Design and Experimental Results for a Direct Sequence Spread-Spectrum Radio Using Differential Phase-Shift Keying Modulation for Indoor, Wireless Communicatons", In: IEEE Journal on Selected Areas in Communications, 1987, VOL SAC-5, No. 5, S. 815-823.
[15] F. Moeller, A. Rabah, S.M. Richie, M.A. Belkerdid, D.C. Malocha: "Differential Phase Shift Keying Direct Sequence Spread Spectrum Single SAW Based Correlator Receiver, In: Ultrasonics Symosium, 1994, S. 189-193.
[16] P.G. Schelbert: "Correlator Module for Spread-Spectrum DPSK Asynchronous Demodulation", In: Ultrasonics Symposium, 1990, S. 145-149.
[17] T. Ikeda, Y. Shinova, K. Toda: "Surface Acoustic Wave Binary Phase Shift Keying System for Time-Division Muitiple Acces", In: Jpn. J. Appl. Phys., 1993, Vol. 32, S. 2325-2328.
[18] H.J. Fröhlich, J. Enderlein, and E. Chilla: F.R.G. Patent Applikation, Seriennummer P 44 24 773.7, Angemeldet 05.07.94.

## Patentansprüche

1. Spread-Spektrum-Signalübertragungsverfahren, bei dem in einem Sender (Fig. 1A) eine Trägerfrequenz mit einem analogen oder digitalen Basisbandsignal moduliert, insbesondere frequenzmoduliert, und der frequenzmodulierte Träger in eine Impulsfolge (Fig. 2A(b)) gewandelt wird, deren Impulse zur Auslösung kodierter bangespreizter Signale (Fig. 2A(c,d)) verwendet wird, welche über eine Antenne (AT1) ausgestrahlt werden, und bei dem die ausgestrahlten Signale anschließend von einer Antenne (AT2) empfangen und mit einem dem Kode der kodierten bandgespreizten Signale zeitinversen Kode verknüpft werden, wodurch eine Reihenfolge von Korrelationsspitzen (Fig 2B.(f)) entsteht, die in eine Impulsfolge (Fig. 2B(g) bzw. (Fig. 2B(h)) umgewandelt und anschließend zur Gewinnung eines dem analogen oder digitalen Basisbandsignals entsprechenden Ausgangssignal (Fig. 2B(i)) demoduliert, insbesondere frequenzdemoduliert wird.

2. Verfahren nach Anspruch 1, dadurch gekennzeichnet, daß die Umwandlung des frequenzmodulierten Signals in eine Impulsfolge mittels eines Nullpunktdetektors oder eines Schwellwertschalters (S1) erfolgt und die Impulsfolge einer Schaltung zugeführt wird, in welcher durch die Impulsfolge eine Folge kodierter Signale ausgelöst wird, und daß die Verknüpfung des Empfangssignals mit dem zeitinversen Kode mittels eines Korrelators durchgeführt wird, dessen Ausgangssignal eine Sequenz von Korrelationsspitzen (Fig. 2B(f)) ist, die mittels eines Demodulators mit Schwellwertschalter (DS) auf der Empfängerseite zu der Impulsfolge umgewandelt wird, deren Wiederholfrequenz der Wiederholfrequenz der Impulsfolge auf der Senderseite entspricht, wobei der Korrelator vorzugsweise in Form eines PSK-Filters vorzugsweise in AOW-Technik realisiert wird.

3. Verfahren nach Anspruch 1 oder 2, dadurch gekennzeichnet, daß das frequenzmodulierte Signal nach gegebenenfalls vorgesehener Filterung mittels eines Bandpaßfilters (B1) und wahlweise Verstärkung (A2) auf eine erwünschte Wiederholfrequenz umgesetzt wird, bevor es zur Auslösung der kodierten bandgespreizten Signale (Fig. 2A(c,d)) verwendet wird, und/oder daß auf der Empfangsseite das rekonstruierte frequenzmodulierte Trägersignal (Fig 2B(i)) vor der Demodulation einer Frequenzumsetzung unterzogen wird.

4. Verfahren nach einem der vorhergehenden Ansprüche, dadurch gekennzeichnet, daß nach der Auslösung der kodierten bandgespreizten Signale im Sender diese vor Anlage an die Sendeantenna einer Frequenzumsetzung unterzogen werden, und daß auf der Empfängerseite nach dem Empfang durch die Empfangsantenne (AT2) eine Frequenzumsetzung auf die Frequenz des Empfängerkorrelators vorgenommen wird.

5. Verfahren nach einem der vorhergehenden Ansprüche, dadurch gekennzeichnet, daß die Sequenz der Korrelationsspitzen nach der Umwandlung mittels eines Demodulators mit Schwellwertschalter (DS) und mittels einer Impulsformeinrichtung (IF) zu einem Rechtecksignal mit TTL-Pegel umformiert (Fig. 2B(h)) und anschließend in ein Sinussignal (Fig. 2B(i)) umgewandelt wird, wobei vorzugsweise das Sinussignal direkt oder nach einer Frequenzumsetzung mittels eines Frequenzdemodulators zum Ausgangssignal demoduliert wird.

6. Spread-Spektrum-Signalübertragungssystem, bestehend aus einem Sender (Fig.1A) mit einem Oszillator (O1) zur Erzeugung einer Trägerfrequenz, mit einer Modulationseinrichtung (FM und ggf. MC, A1, LP) zur Modulierung der Trägerfrequenz, insbesondere zur Frequenzmodulierung der Trägerfrequenz mit einem analogen oder digitalen Basisbandsignal, mit einer Kodiereinrichtung bzw. mit einem Kodiermodul (12) in der bzw. in dem die modulierte Trägerfrequenz in eine Impulsfolge umwandelbar ist, deren Impulse dann der im Sinne der Auslösung von kodierten bandgespreizten Signalen, gegebenenfalls nach vorheriger Frequenzumsetzung, mit einem Kode verknüpft werden und mit einer Antennenschaltung (AT1) zum Ausstrahlen der von der Kodiereinrichtung erhaltenen Signale, gegebenenfalls nach vorheriger Frequenzumsetzung, sowie mit einer eine Antenne (AT2) aufweisende Empfangsschaltung, welche die empfangenen Signale, gegebenenfalls nach Frequenzumsetzung, einer Dekodierschaltung (20) zuführt, in welcher das Signal mit einem dem erstgenannten Kode zeitinversen Kode verknüpfbar ist, wodurch eine Sequenz von Korrelationsspitzen entsteht, mit einer Schaltung (DS, IF, SN) zur Umwandlung der Sequenz von Korrelationsspitzen in ein Sinussignal (Fig. 2B(i)) und mit einem Demodulator (22), welcher das Sinussignal, gegebenenfalls nach vorheriger Frequenzumwandlung, in ein Ausgangssignal demoduliert, das dem analogen oder digitalen Basisbandsignal entspricht, wobei vorzugsweise die Impulsformeinrichtung (IF) des Empfängers einen monostabilen Multivibrator enthält, der bei jeder Korrelationsspitze einen Impuls erzeugt und nach Ablauf der Haltezeit auf den Ausgangswert zurückfällt, wobei die Haltezeit kürzer ist als der zeitliche Abstand zwischen zwei aufeinanderfolgenden Impulsen bei der höchsten vorgesehenen Wiederholfrequenz.

7. Spread-Spektrum-Signalübertragungssystem nach Anspruch 6, dadurch gekennzeichnet, daß die Kodiereinrichtung (12) einen Nullpunktdetektor oder einen Schweliwertschalter (S1) umfaßt, der das Frequenzmodulatorsignal, gegebenenfalls nach Frequenzumsetzung, in die Impulsfolge umwandelt, und einen PSK-Sendefilter (PSK-TX) aufweist, dem die Impulsfolge zur Erzeugung der kodierten bandgespreizten Signale zuführbar ist, und daß die Dekodierschaltung des Empfängers einen PSK-Empfangsfilter (PSK-RX) aufweist, mit einem dem Kode der Kodiereinrichtung zeitinversen Kode, an dessen Ausgang die Sequenz von Korrelationsspitzen erhältlich ist, wobei die Dekodierschaltung weiterhin einen Demodulator mit Schwellwertschalter (DS) sowie eine Impulsformeinrichtung (IF) und eine Signalformeinrichtung (SN) aufweist, an deren Ausgang das modulierte Sinussignal auf der Empfängerseite verfügbar ist, wobei vorzugsweise der Sender (Fig. 1A) einen Frequenzumsetzer (M1) aufweist, welcher das frequenzmodulierte Signal vor der Kodierung auf eine erwünschte Wiederholfrequenz umsetzt, ebenfalls vorzugsweise ein Bandpaßfilter (B1) und ein Verstärker (A2) zwischen dem Frequenzmodulator (FM) und dem Frequenzumsetzer (M1) vorgesehen sind und wahlweise, daß die FM Demodulation durch einen das Ausgangssignal über die Zeit integrierenden Integrators erfolgt.

8. Spread-Spektrum-Signalübertragungssystem nach einem der vorhergehenden Ansprüche, dadurch gekennzeichnet, daß der Empfänger (Fig. 1B) vor der Dekodierschaltung zur Gewinnung des Ausgangssignals einen Frequenzumsetzer (M4, O5, M5, O6) aufweist, und/oder gekennzeichnet durch einen Frequenzumsetzer (M2, O3), der zwischen der Kodiereinrichtung (12) und der Senderantenne (AT1) vorgesehen ist und durch einen weiteren Frequenzumsetzer (M3,O4) zwischen der Empfangsantenne (AT2) und der Dekodierschaltung (20).

9. Vorrichtung nach einem der vorhergehenden Ansprüche 6 bis 8, dadurch gekennzeichnet, daß die Impulsformeinrichtung (IF) die Sequenz der Korrelationsspitzen nach der Umwandlung mittels des Demodulators mit Schwellwertschalter (DS) zu einem Rechtecksignal mit TTL-Pegel umformiert, und daß eine Einrichtung (SN) vorgesehen ist, um das Rechtecksignal in ein Sinussignal umzuwandeln, und vorzugsweise, daß der Sender einen Verstärker (A1) zum Verstärken des Basisbandsignals und einen Filter, insbesondere Tiefpaßfilter (LP) oder Bandpaßfilter zur Filterung des verstärkten Basisbandsignals enthält.

10. Sender zur Durchführung des Verfahrens nach einem der Ansprüche 1 bis 5 bzw. zur Anwendung in einem Spread-Spektrum-Übertragungssystem nach einem der Ansprüche 6 bis 9.

11. Empfanger zur Durchführung des Verfahrens nach einem der Ansprüche 1 bis 5 bzw. zur Anwendung in einem Spread-Spektrum-Übertragungssystem nach einem der Ansprüche 6 bis 9.
